Europäisches Patentamt

European Patent Office

Office européen des brevets

(11) Veröffentlichungsnummer: **0 189 376 B1**

# (12) EUROPÄISCHE PATENTSCHRIFT

(45) Veröffentlichungstag der Patentschrift: **06.05.92**

(21) Anmeldenummer: **86810024.9**

(22) Anmeldetag: **20.01.86**

(51) Int. Cl.⁵: **C07C 309/35**, C09B 1/24

(54) **Verfahren zur Herstellung von 1,4-Diaminoanthrachinon-2-sulfonsäure.**

(30) Priorität: **24.01.85 CH 315/85**

(43) Veröffentlichungstag der Anmeldung:
**30.07.86 Patentblatt 86/31**

(45) Bekanntmachung des Hinweises auf die
Patenterteilung:
**06.05.92 Patentblatt 92/19**

(84) Benannte Vertragsstaaten:
**CH DE FR GB LI**

(56) Entgegenhaltungen:
**FR-A- 401 306**
**GB-A- 396 077**
**GB-A- 664 839**

(73) Patentinhaber: **CIBA-GEIGY AG**
**Klybeckstrasse 141**
**CH-4002 Basel(CH)**

(72) Erfinder: **Grélat, Maurice, Dr.**
**Via al Doyro 3**
**CH-6815 Melide(CH)**
Erfinder: **Schaulin, Rudolf, Dr.**
**Schäferstrasse 62**
**CH-4125 Riehen(CH)**

**Beschreibung**

Die Erfindung betrifft ein Verfahren zur Herstellung von 1,4-Diaminoanthrachinon-2-sulfonsäure ausgehend von 1,4-Diaminoanthrachinon oder Leuko-1,4-diaminoanthrachinon.

1,4-Diaminoanthrachinon-2-sulfonsäure ist ein wichtiges Zwischenprodukt und dient u.a. zur Herstellung von Textilfarbstoffen. In der Literatur sind eine Reihe von Verfahren zur Herstellung dieser Verbindung beschrieben; so z.B. in der DE-A-19 06 834 ein mehrstufiges Verfahren unter Verwendung von 1-Aminoanthrachinon-2-sulfonsäure als Ausgangsverbindung. Zunächst wird am Aminostickstoff der 1-Aminoanthrachinonsulfonsäure eine Schutzgruppe eingeführt, dann wird die Sulfonsäure in 4-Stellung nitriert, anschliessend spaltet man die Schutzgruppe wieder ab und reduziert die 4-Nitrogruppe zur Aminogruppe.

Desweiteren ist in der polnischen Patentschrift 56.839 eine Methode angegeben, wonach die 1,4-Diaminoanthrachinon-2-sulfonsäure durch thermische Umlagerung aus 1-Aminoanthrachinon-4-sulfaminsäure in einer Ausbeute von 60% erhalten wird.

Ferner sind auch Verfahren zur Herstellung von 1,4-Diaminoanthrachinon-2-sulfonsäure durch direkte Sulfonierung des 1,4-Diaminoanthrachinons bekannt und zwar mittels Chlorsulfonsäure als Sulfonierungsmittel, in Di- oder Trichlorbenzol als Reaktionsmedium (japanische Patentanmeldungen 75/83.954; 79/168.975; 80/138.504; 80/130.188). Nachteil dieser Verfahren ist, dass das organische Lösungsmittel recycliert werden muss und nach mehrmaliger Verwendung, wie bei chlorierten Kohlenwasserstoffen vielfach der Fall, Schwierigkeiten bei der Entsorgung verursacht.

Schließlich ist aus der FR-A-401 306 noch ein Verfahren bekannt, dass auf der Umsetzung von 1,4-Diaminoanthrachinon mit Oleum in Gegenwart von Borsäureanhydrid beruht.

Von einer Herstellung der 1,4-Diaminoanthrachinon-2-sulfonsäure durch Sulfierung in Oleum wird wegen der Hydrolyseempfindlichkeit der Substituenten grundsätzlich abgeraten - siehe Houben-Weyl Bd. 7, Teil 3c, Seite 192 (1979). Weiter findet sich in dieser Literaturstelle der Hinweis, dass 1,4-Diaminoanthrachinon in Oleum mit guter Ausbeute in den cyclischen 1,9;4,10-Bis-sulfimidester überführt wird.

Schliesslich ist die 1,4-Diaminoanthrachinon-2-sulfonsäure auch über die Bromaminsäure zugänglich (Houben-Weyl Bd. 7/3c Seite 178 [1979]). Dieses Verfahren liefert wohl ein reines Produkt in guter Ausbeute, ist jedoch relativ aufwendig, da mit flüssigem Ammoniak unter Druck gearbeitet wird.

Aufgabe der vorliegenden Erfindung ist es daher, ein Verfahren zu entwickeln, das sowohl einfach in der Durchführung ist - also keine mehrstufige Synthese und auch keine Verfahrensführung, die apparativ aufwendig ist - als auch das gewünschte Produkt in hoher Ausbeute liefert, ohne dass schwer zu beseitigende Lösungsmittel benötigt werden.

Gefunden wurde, dass sich 1,4-Diaminoanthrachinon überraschenderweise durch Behandeln mit Oleum in Ausbeute von ca. 80% in die 1,4-Diaminoanthrachinon-2-sulfonsäure überführen lässt, wobei zur Ausbeutesteigerung eine Lewis-Base zugesetzt wird, die mit Schwefeltrioxid einen Komplex bildet.

Gegenstand der vorliegenden Erfindung ist somit ein Verfahren zur Herstellung von 1,4-Diaminoanthrachinon-2-sulfonsäure durch Sulfonieren von 1,4-Diaminoanthrachinon oder Leuko-1,4-diaminoanthrachinon, das dadurch gekennzeichnet ist, dass man die Sulfonierung in der Hitze, mittels Oleum als Sulfonierungsmittel, mit Zusatz einer Lewis-Base durchführt.

Das Verfahren lässt sich leicht durchführen, kommt ohne organische Lösungsmittel aus und liefert die 1,4-Diaminoanthrachinon-2-sulfonsäure in guter Ausbeute.

Das als Ausgangsmaterial verwendete 1,4-Diaminoanthrachinon bzw. Leuko-1,4-diaminoanthrachinon ist bekannt und beispielsweise durch Umsetzen von Dihydro-chinizarin mit Ammoniak zugänglich [Houben-Weyl Bd. 7/3c Seite 164 (1979)].

Bei dem im vorliegenden Verfahren als Sulfierungsmittel verwendeten Oleum handelt es sich in erster Linie um solches einer Konzentration von 20 bis 70 Gew.%. Natürlich kann als Reaktionsmedium auch konz. Schwefelsäure vorgelegt und dann die erforderliche Menge an Schwefeltrioxid zudosiert werden. Grundsätzlich kann man das Ausgangsmaterial in konz. Schwefelsäure, vorteilhaft 100%iger Schwefelsäure vorlegen und dann Oleum zugeben oder gleich direkt in Oleum eintragen. Arbeitet man in Schwefelsäure, so verwendet man auf 1 Teil 1,4-Diaminoanthrachinon bzw. Leuko-1,4-diaminoanthrachinon zweckmässiger Weise 2 bis 10, insbesondere 3 bis 4 Teile konz. Schwefelsäure. Es wird möglichst konzentrierte Schwefelsäure verwendet, da das Restwasser durch einen entsprechenden Ueberschuss an Oleum gebunden werden muss. Unabhängig davon, ob das Ausgangsmaterial in Schwefelsäure vorgelegt oder direkt in Oleum eingetragen wird, ist das Oleum in Konzentration und Menge so zu bemessen, dass das Reaktionsgemisch am Ende der Reaktion eine Schwefeltrioxidkonzentration von vorteilhaft 10 bis 30 Gew.% aufweist.

Durchgeführt wird die Reaktion zweckmässigerweise bei einer Temperatur von 90 bis 150°C, insbesondere 100 bis 130°C. Bei Temperaturen über 150°C nimmt die Bildung von Nebenprodukten stark zu, während die Reaktion bei Temperaturen unter 90°C zu langsam verläuft.

Zur Steigung der Ausbeute wird, die Reaktion in Gegenwart einer Lewis-Base durchgeführt Lewis-Basen bilden mit dem Schwefeltrioxid des Oleums Koordinationsverbindungen sog. $SO_3$-Addukte oder Komplexe. Aus diesen Komplexen wird das Schwefeltrioxid während der Reaktion kontinuierlich wieder freigesetzt [siehe E.E. Gilbert, Sulfonation and Related Reactions; Interscience Publishers (1965)]. Als Lewis-Basen kommen in erster Linie Di- und Trialkylamine mit $C_1$ bis $C_4$ Alkylresten, wie z.B. Dimethylamin, Diäthylamin, Dipropylamin, Dibutylamin, Trimethylamin, Triäthylamin, Tripropylamin oder Tributylamin in Betracht. Ferner N-Mono- oder N,N-Dialkyl-($C_1$-$C_4$)-aniline, wie z.B. Methylanilin, N-Aethylanilin, N-Propylanilin, N-Butylanilin, N,N-Dimethylanilin, N,N-Diäthylanilin, N,N-Dipropylanilin oder N,N-Dibutylanilin, sowie Pyridin, Chinolin, Morpholin oder Dioxan, wobei diese substituiert sein können, beispielsweise durch Niederalkyl, genannt sind 2-Methylpyridin, 2,6-Dimethylpyridin, N-Aethylmorpholin; in Betracht kommen ferner N,N-Dialkyl-($C_1$-$C_4$)-carbonsäureamide, wie z.B. N,N-Dimethylformamid, N,N-Dimethylacetamid, N,N-Diäthylformamid oder N,N-Diäthglacetamid oder auch Trialkyl-($C_1$-$C_4$)-phosphate, wie z.B. Trimethylphosphat, Triäthylphosphat, Tripropylphosphat oder Tributylphosphat. Bevorzugt als Base verwendet werden Pyridin und Dimethylformamid.

Eingesetzt wird die Lewis-Base in einer Menge von 0,5 bis 2 Mol bezogen auf 1 Mol 1,4-Diaminoanthrachinon bzw. Leuko-1,4-diaminoanthrachinon. Zweckmässigerweise arbeitet man, bezogen auf das Diamin, mit einer etwa äquimolaren Menge an Lewis-Base.

Nach einer Reaktionsdauer von 2 bis 20 Stunden ist das Ausgangsmaterial nahezu vollständig umgesetzt, und man beginnt mit der Aufarbeitung. Dazu lässt man das Reaktionsgemisch zunächst abkühlen und gibt entweder bei einer Temperatur von ca. 70 bis 80°C langsam Wasser bzw. Eis hinzu oder kühlt das Reaktionsgemisch bis auf Raumtemperatur ab und giesst es anschliessend auf Eis. Man verwendet soviel Wasser bzw. Eis, dass das Reaktionsgemisch auf eine Schwefelsäurekonzentration von 40 bis 80 Gew.% verdünnt wird. Durch die Verdünnung fällt die Sulfonsäure aus und kann anschliessend mittels üblicher Trennmethoden, wie z.B. Filtrieren oder Zentrifugieren, von der verdünnten Schwefelsäure abgetrennt werden. Zweckmässigerweise erfolgt die Abtrennung der rohen Sulfonsäure mittels Filtration. Der so erhaltene Filterkuchen wird gegebenenfalls mit verdünnter Schwefelsäure gewaschen oder anschliessend in Wasser aufgenommen, durch Zugabe von Lauge, z.B. Natronlauge ein pH von ca. 1-2 eingestellt und das Produkt erneut filtriert.

Um eine möglichst reine 1,4-Diaminoanthrachinon-2-sulfonsäure mit geringem Restschwefelsäuregehalt zu isolieren, erweist es sich als zweckmässig, das rohe Reaktionsprodukt in Alkalilauge zu lösen und aus schwach alkalischer Lösung die 1,4-Diaminoanthrachinon-2-sulfonsäure nach Zugabe eines Magnesiumsalzes oder eines Magnesiumionen abgebenden Mittels als Magnesiumsalz zu isolieren. Der Vorteil dieser Verfahrensweise besteht darin, dass das Magnesiumsalz der 1,4-Diaminoanthrachinon-2-sulfonsäure beim Abkühlen der schwach alkalischen Lösung in leichtfiltrierbarer Form ausfällt und sich problemlos abfiltrieren und neutral waschen lässt.

Das Magnesiumsalz der 1,4-Diaminoanthrachinon-2-sulfonsäure lässt sich nach bekannten Methoden beispielsweise durch Ansäuern oder mittels Ionenaustauscher in die freie Säure überführen.

Als Magnesiumsalze bzw. Magnesiumionen abgebende Mittel kommen in erster Linie wasserlösliche Magnesiumsalze, wie z.B. Magnesiumchlorid und insbesondere Magnesiumsulfat daneben aber auch Magnesiumcarbonat in Frage. Ferner kann das Magnesium beispielsweise auch in komplexgebundener Form verwendet werden.

Eingesetzt wird das Magnesiumsalz bzw. Magnesiumionen abgebende Mittel zweckmässigerweise in äquimolarer Menge, bezogen auf 1,4-Diaminoanthrachinon-2-sulfonsäure, mit einem 10 bis 20%igen Ueberschuss. Die Zugabe des Magnesiumsalzes oder der Magnesiumsalzlösung erfolgt vorteilhaft bei einer Temperatur von 70 bis 110°C, insbesondere 80 bis 95°C.

Das Verfahren zur Herstellung der 1,4-Diaminoanthrachinon-2-sulfonsäure kann im einzelnen beispielsweise folgendermassen durchgeführt werden:
1,4-Diaminoanthrachinon bzw. Leuko-1,4-diaminoanthrachinon wird in konz. Schwefelsäure, zweckmässigerweise 100%iger Schwefelsäure (sog. Monohydrat) eingetragen, die zuvor oder anschliessend mit einer ca. äquimolaren Menge, bezogen auf das Diamin, an Dimethylformamid oder Pyridin als Lewis-Base versetzt wird. Anschliessend erwärmt man die schwefelsaure Lösung oder Suspension auf eine Temperatur von 100 bis 120°C und gibt Oleum einer Konzentration von 50 bis 70 Gew.% hinzu. Die Zugabe erfolgt tropfenweise, wobei man zweckmässigerweise so vorgeht, dass man zu Beginn der Reaktion durch schnelleres Zutropfen rasch eine genügend hohe Oleumkonzentration einstellt und gegen Ende der Reaktion durch langsames Zutropfen eine Minimalkonzentration von ca. 10 bis 30 Gew.% Schwefeltrioxid, bezogen auf die Reaktionsmasse, einhält. Die Reaktionszeit beträgt ca. 5 bis 10 Stunden.

Vor der Aufarbeitung lässt man das Reaktionsgemisch erkalten und giesst es anschliessend auf Eis. Die Menge an Eis ist so zu bemessen, dass das Reaktionsgemisch nach dem Verdünnen eine Schwefelsäurekonzentration von 60 bis 70 Gew.% aufweist. Man erhält eine braune Suspension aus der man die 1,4-Diaminoanthrachinon-2-sulfonsäure abfiltriert. Der feuchte, säurehaltige Filterkuchen wird sodann in Wasser suspendiert. Dann gibt man Natron- oder Kalilauge hinzu, bis ein pH von ca. 8 bis 9 erreicht ist. Es bildet sich das Natrium- bzw. Kaliumsalz der 1,4-Diaminoanthrachinon-2-sulfonsäure, das gut wasserlöslich ist. Man erhält so eine blaue Lösung, die man gegebenenfalls klärfiltriert. Anschliessend wird der pH der Lösung schwach alkalisch eingestellt (ca. pH 7 bis 8) und in der Wärme gibt man eine, bezogen auf die 1,4-Diaminoanthrachinon-2-sulfonsäure, etwas mehr als äquimolare Menge ( ~ 10%iger Ueberschuss) an Magnesiumsalz, z.B. Magnesiumsulfat, hinzu. Beim Abkühlen der Lösung fällt das Magnesiumsalz der 1,4-Diaminoanthrachinon-2-sulfonsäure in kristalliner Form aus, wird abfiltriert und gegebenenfalls mit einer wässrigen Magnesiumsalzlösung, z.B. einer ca. 3%igen Magnesiumsulfatlösung gewaschen und getrocknet. Die Ausbeute beträgt ca. 85 bis 90%.

Das Magnesiumsalz der 1,4-Diaminoanthrachinon-2-sulfonsäure kann als solches direkt in der Farbstoffsynthese verwendet werden.

Vor allem dient die 1,4-Diaminoanthrachinon-2-sulfonsäure, als freie Säure oder Magnesiumsalz, zur Herstellung anthrachinoider Dispersionsfarbstoffe, die insbesondere zum Färben hydrophober Fasermaterialien wie z.B. Polyester, geeignet sind.

Die folgenden Beispiele dienen der Veranschaulichung der Erfindung; Teile bedeuten Gewichtsteile und Prozente Gewichtsprozente. Zur dünnschichtchromatographischen Analyse des Produkts werden Kieselgur-Fertigplatten mit UV Indikator verwendet; Zusammensetzung des Laufmittels: 138 ml Amylalkohol, 105 ml Methanol, 90 ml Benzol, 36 ml Wasser und 30 ml 25%iger Ammoniak.

VERGLEICHSBESPIEL 1

In 270 Teile 100%iger Schwefelsäure werden innerhalb von 30 Minuten 80 Teile Leuko-1,4-diaminoanthrachinon eingetragen. Die Temperatur steigt dabei auf 65 bis 70°C. Man erhitzt die Lösung auf 110°C und lässt dann innerhalb von einer Stunde zunächst 90 Teile 66%iges Oleum und innerhalb der nächsten 3 Stunden weitere 80 Teile 66%iges Oleum zutropfen. Anschliessend rührt man das Reaktionsgemisch noch weitere 4 Stunden bei 110°C. Dann lässt man es auf Raumtemperatur abkühlen und giesst die Reaktionsmasse auf 255 Teile Eis. Es entsteht eine braune Suspension, die man bei Raumtemperatur filtriert. Man erhält auf diese Weise eine rohe, noch schwefelsäurehaltige 1,4-Diaminoanthrachinon-2-sulfonsäure ausreichender Reinheit, die man in dieser Form bereits in der Farbstoffsynthese verwenden kann, insbesondere dann, wenn der folgende Syntheseschritt ohnehin in Schwefelsäure durchgeführt wird.

Um ein säurefreies, leichtfiltrierbares Endprodukt zu erhalten, schliesst man einen weiteren Aufarbeitungsschritt an. Dazu wird der saure Filterkuchen in Wasser angeschlämmt und die wässrige Suspension mittels 35%iger Natronlauge auf einen pH von 8,5 eingestellt. Es entsteht eine blaue Lösung, die auf 85°C erwärmt und klärfiltriert wird. Anschliessend stellt man den pH der Lösung auf 7,5 ein und gibt 70 Teile Magnesiumsulfat in die 85 bis 90°C heisse Lösung. Beim Erkalten kristallisiert das Produkt als Magnesiumsalz aus, wird abfiltriert und mit einer 3%igen Magnesiumsulfatlösung gewaschen und dann getrocknet. Die dünnschichtchromatographische Analyse zeigt ein einheitliches Produkt mit einem $R_f$ von 0,56; die Ausbeute beträgt ca. 80%.

Beispiel 2

Man verfährt wie im Beispiel 1 beschrieben, versetzt jedoch die Schwefelsäure vor Eintragen des Leuko-1,4-diaminoanthrachinons mit 30 Teilen Dimethylformamid. Man erhält hier 97,8 Teile 1,4-Diaminoanthrachinon-2-sulfonsäure•Magnesiumsalz, was einer Ausbeute von 87% entspricht.

Beispiel 3

Innerhalb einer Stunde trägt man in 228 Teile 25%iges Oleum 60 Teile 1,4-Diaminoanthrachinon ein und tropft anschliessend 20 Teile Pyridin zu. Die Temperatur des Reaktionsgemisches beträgt 70 bis 80°C und wird weiter auf 120°C erhöht. Bei dieser Temperatur rührt man das Reaktionsgemisch während 3 Stunden. Dann lässt man die Reaktionsmasse auf 70 bis 80°C abkühlen und tropft langsam 220 Teile Wasser zu. Es bildet sich eine Suspension, die man bei Raumtemperatur filtriert. Den Filterkuchen wäscht man mit 100 Teilen 50%iger Schwefelsäure und dispergiert ihn anschliessend in Wasser. Der pH-Wert der wässrigen Suspension wird dann durch Zugabe von 35%iger Natronlauge auf 7,5 eingestellt, dabei geht die 1,4-Diaminoanthrachinon-2-sulfonsäure in Lösung. Man erwärmt die Lösung sodann auf 85 bis 90°C, gibt 40 Teile Magnesiumsulfat zu und lässt erkalten. Die 1,4-Diaminoanthrachinon-2-sulfonsäure kristallisiert in Form des Magnesiumsalzes aus, wird abfiltriert und mit einer 5%igen Magnesiumsulfatlösung gewaschen. Nach dem Trocknen erhält man 72,4 Teile 1,4-Diaminoanthrachinon-2-sulfonsäure • Magnesiumsalz; das entspricht einer Ausbeute von 85%. Die chromatographische Analyse zeigt ein einheitliches Produkt mit einer Spur an Ausgangsmaterial; der $R_f$- Wert beträgt 0,57, was die Identität beweist zwischen diesem und dem gemäss Beispiel 1 erhaltenen Produkt.

**Patentansprüche**

1. Verfahren zur Herstellung von 1,4-Diaminoanthrachinon-2-sulfonsäure durch Sulfonieren von 1,4-Diaminoanthrachinon oder Leuko-1,4-diaminoanthrachinon, dadurch gekennzeichnet, dass man die Sulfonierung in der Hitze, mittels Oleum in einer Konzentration von 20 bis 70 Gew.% als Sulfonierungsmittel, in Gegenwart einer Lewis-Base durchführt, wobei das Oleum in einer Menge und Konzentration verwendet wird, dass der Schwefeltrioxidgehalt des Reaktionsgemisches am Ende der Reaktion zwischen 10 und 30% liegt.

2. Verfahren gemäss Anspruch 1, dadurch gekennzeichnet, dass man die Reaktion bei einer Temperatur von 90 bis 150°C, insbesondere 100 bis 130°C durchführt.

3. Verfahren gemäss Anspruch 1, dadurch gekennzeichnet, dass man als Lewis-Base ein $C_1$-$C_4$-Di- oder -Trialkylamin, N-Mono- oder N,N-Dialkyl-($C_1$-$C_4$)-anilin, Pyridin, Chinolin, Morpholin, Dioxan, N,N-Dialkyl-($C_1$-$C_4$)-carbonsäureamid oder Trialkyl-($C_1$-$C_4$)-phosphat verwendet.

4. Verfahren gemäss Anspruch 3, dadurch gekennzeichnet, dass man Pyridin oder Dimethylformamid verwendet.

5. Verfahren gemäss Anspruch 3, dadurch gekennzeichnet, dass man die Lewis-Base bezogen auf 1,4-Diaminoanthrachinon bzw. Leuko-1,4-diaminoanthrachinon in äquimolarer Menge verwendet.

6. Verfahren gemäss Anspruch 1, dadurch gekennzeichnet, dass man die 1,4-Diaminoanthrachinon-2-sulfonsäure in Form des Magnesiumsalzes isoliert.

**Claims**

1. A process for the preparation of 1,4-diaminoanthraquinone-2-sulfonic acid by sulfonating 1,4-diaminoanthraquinone or leuco-1,4-diaminoanthraquinone, which comprises carrying out the sulfonation at elevated temperature with oleum having a concentration of 20 to 70% by weight as sulfonating agent, in the presence of a Lewis base, where the oleum is used in an amount and concentration such that the content of sulfur trioxide in the reaction mixture at the end of the reaction is between 10 and 30 %.

2. A process according to claim 1, wherein the reaction is carried out at a temperature from 90 to 150°C, in particular from 100 to 130°C.

3. A process according to claim 1, wherein the Lewis base used is a di- or tri-$C_1$-$C_4$ alkylamine, an N-mono- or N,N-di($C_1$-$C_4$)-alkylaniline, pyridine, quinoline, morpholine, dioxane, an N,N-di($C_1$-$C_4$)-alkylcarboxamide or a tri($C_1$-$C_4$)alkyl phosphate.

4. A process according to claim 3, wherein pyridine or dimethylformamide is used.

5. A process according to claim 3, wherein the Lewis base is used in an equimolar amount, based on 1,4-diaminoanthraquinone or leuco-1,4-diaminooanthraquinone.

6. A process according to claim 1, wherein the 1,4-diaminoanthraquinone-2-sulfonicacid is isolated in the form of the magnesium salt.

**Revendications**

1. Procédé de préparation de l'acide 1,4-diaminoanthraquinone-2-sulfonique par sulfonation de la 1,4-diaminoanthraquinone ou de la leuco-1,4-diaminoanthraquinone, caractérisé en ce qu'on réalise la sulfonation à chaud, au moyen d'un oléum de concentration 20 à 70 % en poids, en tant qu'agent de sulfonation, en présence d'une base de Lewis, l'oléum étant utilisé en une quantité et à une concentration telles que la teneur en trioxide de soufre du mélange réactionnel soit comprise, à la fin de la réaction, entre 10 et 30 %.

2. Procédé selon la revendication 1, caractérisé en ce que la réaction est réalisée à une température de 90 à 150°C, en particulier de 100 à 130°C.

3. Procédé selon la revendication 1, caractérisé en ce qu'on utilise, comme base de Lewis, une di- ou trialkyl($C_{1-4}$)amine, une N-mono- ou N,N-dialkyl($C_{1-4}$)aniline, la pyridine, la quinoléine, la morpholine, le dioxane, un N,N-dialkyl-($C_{1-4}$)-carboxamide ou un phosphate de trialkyle($C_{1-4}$).

4. Procédé selon la revendication 3, caractérisé en ce qu'on utilise la pyridine ou le diméthylformamide.

5. Procédé selon la revendication 3, caractérisé en ce qu'on met en oeuvre la base de Lewis en quantité équimolaire par rapport à la 1,4-diaminoanthraquinone ou à la leuco-1,4-diaminoanthraquinone.

6. Procédé selon la revendication 1, caractérisé en ce qu'on isole l'acide 1,4-diaminoanthraquinone-2-sulfonique sous forme de son sel de magnésium.